# EUROPÄISCHE PATENTSCHRIFT

(11) **EP 2 374 594 B1**
(45) Veröffentlichungstag und Bekanntmachung des Hinweises auf die Patenterteilung: **18.03.2020**
(21) Anmeldenummer: 11002776.0
(22) Anmeldetag: 02.04.2011
(51) Int. Cl.: B29C 45/17, B29C 45/03

(54) **Spritzgiessmaschine**
Injection moulding machine
Machine à mouler par injection

(30) Priorität: 09.04.2010 DE 102010014452
(43) Veröffentlichungstag der Anmeldung: 12.10.2011
(73) Patentinhaber: Wittmann Battenfeld GmbH, 2542 Kottingbrunn (AT)
(72) Erfinder: Ganz, Martin, 2380 Perchtoldsdorf (DE)
(74) Vertreter: Gosdin, Michael

(56) Entgegenhaltungen:
- DE-A1- 2 305 587
- DE-C- 469 994
- JP-A- 2000 246 774
- US-A- 2 675 583
- Carlos Braga: "Mechanical Engineering "Issues" in Micro Mold Design", , 19. Oktober 2009 (2009-10-19), Seiten 1-23, XP055419874, Gefunden im Internet: URL:http://analisestermicas.com.br/UFG/Mic ro-Injetora-Farmacos-Medicamentos.pdf [gefunden am 2017-10-27]

## Beschreibung

Die Erfindung betrifft eine Spritzgießmaschine, umfassend ein Maschinenbett, auf dem zumindest eine Werkzeugschließeinheit und eine Spritzeinheit lagert, wobei das Maschinenbett einen Trägerrahmen umfasst, auf dem die Werkzeugschließeinheit und die Spritzeinheit angeordnet ist, wobei der Trägerrahmen auf Stützelementen des Maschinenbetts aufliegt.

Eine Spritzgießmaschine dieser Art ist aus der DE 23 05 587 A1 bekannt. Als Rahmen der Maschine kommt hier ein Trägerpaar zum Einsatz, welches auf einem Sockel ruht. Ähnliche und andere Lösungen zeigen die US 2 675 583 A**,** die DE 469 994 C, die JP 2000 246744 A und die EP 1 512 511 A1**.**

Gemäß einer weit verbreiteten Bauart besteht das Maschinenbett aus einem Gussteil, an dem Aufnahmeflächen insbesondere für die Werkzeugschließeinheit bzw. für die Spritzeinheit angeordnet sind. Bei den in der Regel zu übertragenden Kräften, insbesondere im Zusammenhang mit der Aufbringung der Werkzeugschließkraft, wird eine Stabilität des Maschinenbetts benötigt, der den massiven und kostenintensiven Aufbau mit Gussbett rechtfertigt.

Kostenaufwändig ist bei der genannten Bauform insbesondere das präzise Fräsen der benötigten Anlageflächen für die Komponenten der Spritzgießmaschine, die vom Maschinenbett getragen werden sollen. Des weiteren ist das sich so ergebende Maschinenbett relativ unflexibel, was Modifikationen im Aufbau der Spritzgießmaschine anbelangt.

Wird alternativ auf eine Schweißkonstruktion zurückgegriffen, bleiben die genannten Nachteile bezüglich des Aufwandes und der Kosten bei der Herstellung sowie bezüglich der Unflexibilität grundsätzlich erhalten. auch hier müssen die Auflageflächen für die Komponenten der Spritzgießmaschine gefräst werden, was einen entsprechenden fertigungstechnischen Aufwand bedeutet.

Im Falle des Spritzgießens von sehr kleinen Spritzgießformteilen, d. h. beim sog. Mikrospritzgießen, ist indes eine solche Lösung zu aufwändig. Allerdings kann ohne weiteres nicht auf sie verzichtet werden, da es gerade auch bei solchen Formteilen auf höchste Präzision ankommt.

In nachteiliger Weise wird daher bislang auch beim Mikrospritzgießen auf Maschinenbetten zurückgegriffen, die sehr aufwändig und damit teuer sind.

Der Erfindung liegt daher die **Aufgabe** zugrunde, eine Spritzgießmaschine der eingangs genannten Art so fortzubilden, dass bei Sicherstellung einer hohen Präzision eine kostengünstigere und einfachere Bauweise erreicht werden kann. Damit soll sich die Spritzgießmaschine insbesondere für das Mikrospritzgießen eignen, bei dem sehr kleine Formteile mit hoher Präzision spritzgegossen werden.

Die **Lösung** dieser Aufgabe durch die Erfindung ist dadurch gekennzeichnet, dass der Trägerrahmen ein sich in eine Längsrichtung erstreckendes Profil ist.

Das Profil des Trägerrahmens ist dabei gemäß einer bevorzugten Ausführungsform der Erfindung U-förmig ausgebildet, wobei ein Verbindungsschenkel vorhanden ist, an dem seitlich je ein Seitenschenkel ansetzt. An den vom Verbindungsschenkel beabstandeten Enden der Seitenschenkel kann je ein Befestigungsschenkel angeformt sein, der parallel zum Verbindungsschenkel verläuft. Das Trägerelement kann dabei aus einem rechteckförmigen Profil gefertigt sein, wobei Teile der Oberseite entfernt sind (z. B. abgefräst wurden) und wobei gegebenenfalls nur einige Verbindungsstreben zur Stabilisierung stehengeblieben sind.

Eine alternative Ausgestaltung sieht vor, dass das Profil des Trägerrahmens rechteckförmig ausgebildet ist.

Der Trägerrahmen besteht bevorzugt aus Blech, insbesondere aus Stahlblech. Er kann in fertigungstechnisch und wirtschaftlich günstiger Weise durch Abkanten eines ebenen Blechstreifens gebildet sein. Im Falle eines Rechteckprofils kann vorgesehen sein, dass das entsprechend abgekantete Blech an der Stoßstelle der Blechenden verschweißt ist.

Der Trägerrahmen ist bevorzugt mit einer Vielzahl von Durchgangsbohrungen versehen. Die Durchgangsbohrungen sind dabei bevorzugt zumindest teilweise äquidistant zueinander angeordnet.

Die Werkzeugschließeinheit und die Spritzeinheit sind bevorzugt - wie auch gegebenenfalls weitere Komponenten bzw. Aggregate der Spritzgießmaschine - durch Schraubverbindungen am Trägerrahmen befestigt.

Die Erfindung sieht also einen als Formrohrahmen ausgebildeten Trägerrahmen vor, der zur Aufnahme jedenfalls der Schließ- und der Spritzeinheit dient und der das zentrale Trägerelement der Spritzgießmaschine darstellt. In einfacher Weise ist es möglich, weitere benötigte Komponenten, Zusatzgeräte bzw. Funktionsmodule am Formrohrrahmen anzubringen, wobei ein modulares Baukonzept verwirklichbar ist. Als Beispiele seien genannt: Materialfördergeräte, Materialtrockner, Handlinggeräte für die Handhabung der Formteile, Temperiergeräte, Kameramodule für die Formteilprüfung, Ablagemodule und post-operative Handhabungselemente (z. B. für die Kontrolle und für die Nachbearbeitung der Formteile).

Diese Lösung hat den Vorteil, dass eine sehr präzise Lagerung der Komponenten der Spritzgießmaschine möglich ist. Vorteilhaft ist weiterhin, dass sich die vorgeschlagene Bauweise sehr gut für einen modularen Aufbau der Spritzgießmaschine eignet.

Der Formrohrrahmen der Spritzgießmaschine eignet sich optimal, um auch weitere Maschinenkomponenten an ihm anzubringen. Das vorgesehene Raster für die Befestigungsbohrungen erlaubt einen hohen Grad an Flexibilität. Ein modularer Aufbau der Spritzgießmaschine wird damit ermöglicht.

Auf kostenintensive Fräs- oder Schweißarbeiten kann verzichtet werden. Die Bearbeitung des Formrohrrahmens kann in einer einzigen Maschinenaufspannung erfolgen, so dass eine präzise Anordnung der Befestigungsbohrungen sichergestellt ist, was wiederum beim Gebrauch des Formrohrrahmens als zentrales Trägerelement der Spritzgießmaschine eine genaue Anordnung der Komponenten der Spritzgießmaschine erlaubt. Daher ist eine sehr hohe Führungsgenauigkeit der sich bewegenden Komponenten leicht erreichbar. Die Genauigkeit des Formrohrrahmens ist also leicht herzustellen und bestimmt die Genauigkeit der Spritzgießmaschine maßgeblich. Lediglich die Position der Befestigungsbohrungen im Formrohrrahmen ist erforderlich, um im weiteren die Präzision sicherzustellen.

Es ergibt sich weiterhin eine leichte und schlanke Bauweise, die insbesondere bei Mikrospritzgießmaschinen vorteilhaft zum Tragen kommt.

Vorteilhaft ist weiterhin, dass bei Verwendung eines normierten Formrohrrahmens Kompatibilität zu weiteren Anlagen, beispielsweise zu einer weiteren Spritzgießmaschine oder zu einem Handhabungssystem besteht. Als Beispiel sei eine Fertigungslinie genannt, bei der ein Mehrkomponenten-Spritzgießen in (mindestens) zwei aufeinander folgenden Spritzgießmaschinen durchgeführt wird.

Es wird mit dem Erfindungsvorschlag also in besonders einfacher Weise möglich, die Spritzgießmaschine in eine Fertigungsanlage einzubinden, die weitere Anlagenteile beinhaltet, und eine Verknüpfung der einzelnen Anlagenteile zu erreichen.

Die Schließeinheit der Spritzgießmaschine ist von ihrem Kraftfluss her bevorzugt vom Formrohrrahmen entkoppelt, so dass die Schließkräfte (die allerdings beim Mikrospritzgießen nicht über Gebühr groß sind) nicht auf den Formrohrrahmen wirken. Bevorzugt kommt der Erfindungsvorschlag beim Mikrospritzgießen zum Einsatz, wo die Werkzeugschließkräfte meist 30 t nicht überschreiten, sondern typischerweise im Bereich zwischen 5 und 15 t liegen.

In sehr einfacher Weise ist das vorgeschlagene Baukonzept auch für den Einsatz im Reinraum geeignet.

Die Spritzgießmaschine ist bei der vorgeschlagenen Ausgestaltung allseitig gut zugänglich und weist hinreichende Freiräume auf. Der Handlingsbereich kann individuell eingeteilt werden, was sich aus dem Raster der Befestigungsbohrungen am Formrohrrahmen ergibt. Aufgrund der hohen Flexibilität wird auch ein schnelles Umrüsten der Spritzgießmaschine ermöglicht. Durch optimierte Ankopplung eines Handhabungssystems wird ein sicheres Handling der Formteile gewährleistet.

In der Zeichnung ist ein Ausführungsbeispiel der Erfindung dargestellt. Es zeigen:
- Fig. 1: in perspektivischer Darstellung eine Spritzgießmaschine, unter anderem mit Maschinenbett, Werkzeugschließeinheit und Spritzeinheit, und

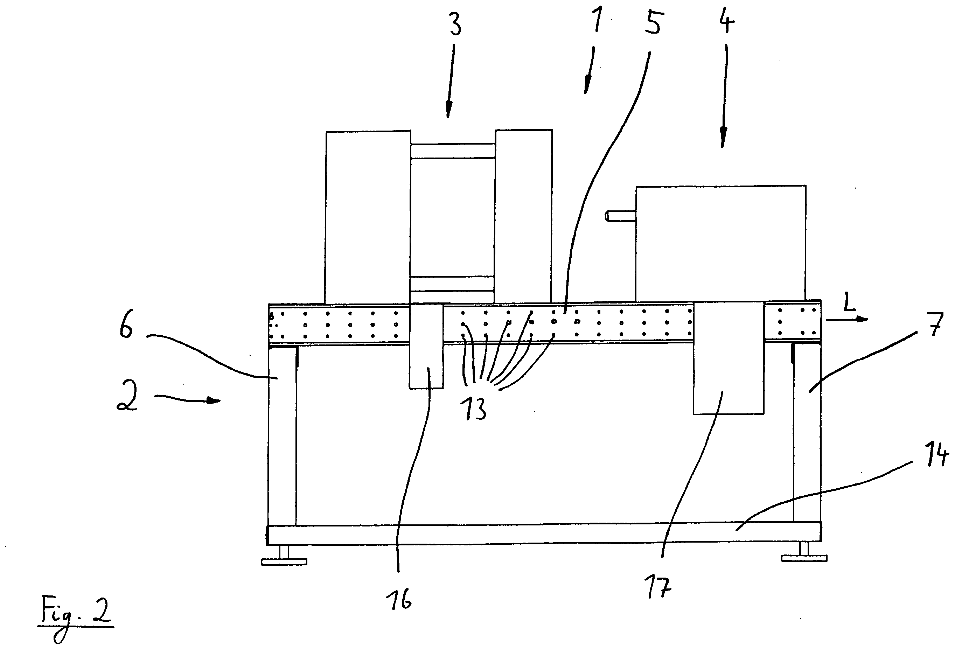

- Fig. 2: in der Seitenansicht die Spritzgießmaschine gemäß Fig. 1.

In den Figuren ist eine Spritzgießmaschine 1 dargestellt, die ein Maschinenbett 2 aufweist, auf dem eine Werkzeugschließeinheit 3 sowie eine Spritzeinheit 4 angeordnet ist.

Das Maschinenbett 2 besteht aus einem Grundrahmen 14, der in seinen Endbereichen je ein vertikal ausgerichtetes Stützelement 6 bzw. 7 aufweist. Die Stützelemente 6, 7 haben an ihrer Oberseite eine Auflagefläche 15. Diese ist ausgebildet, um einen Trägerrahmen (Formrohrrahmen) 5 aufzunehmen. Der Trägerrahmen 5 ist mittels Schraubverbindungen an den Stützelementen 6, 7 fixiert.

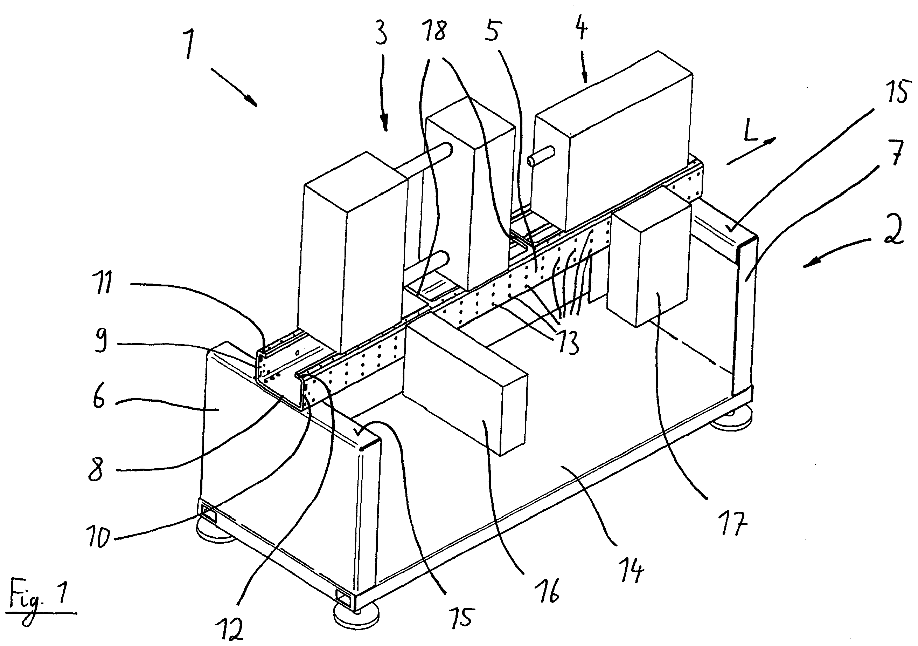

Der Trägerrahmen 5 erstreckt sich in eine Längsrichtung L und ist als universelles Bauteil ausgeführt. Im Ausführungsbeispiel ist der Trägerrahmen 5 als U-förmiges abgekantetes Profilblech ausgebildet. Demgemäß weist er einen Verbindungsschenkel 8 auf (s. Fig. 1), an dessen Seiten rechtwinkelig Seitenschenkel 9 und 10 ansetzen. Am Ende der Seitenschenkel 9, 10 sind Befestigungsschenkel 11 und 12 angeformt, die sich parallel zum Verbindungsschenkel 8 erstrecken.

Die in Fig. 1 zu sehende Struktur des Trägerrahmens 5 ist bevorzugt aus einem Trägerrahmen entstanden, der als Rechteckrohr gefertigt wurde. Demgemäß wurde ein ebenes Blech entsprechend abgekantet und an der Stoßstelle der Blechenden verschweißt. Dann wurde die Oberseite des Trägerrahmens 5 wieder teilweise (z. B. durch Fräsen) entfernt, wobei lediglich die Befestigungsschenkel 11 und 12 stehen blieben. Ebenfalls wurden einige Verbindungsstreben 18 stehen gelassen. Diese geben dem Trägerrahmen 5 eine erhöhte Steifigkeit.

Sowohl für die Befestigungsschenkel 11, 12 als auch für die Seitenschenkel 9, 10 gilt, dass in sie eine Vielzahl an Durchgangsbohrungen 13 eingebracht ist, die als je eine Reihe im Befestigungsschenkel 11, 12 und in drei Reihen in den Seitenschenkeln 9, 10 vorgesehen sind. Die Durchgangsbohrungen 13 sind dabei weitgehend äquidistant in Längsrichtung L eingebracht. Hierdurch ergibt sich ein Rastermaß (d. h. ein Abstand zwischen zwei Durchgangsbohrungen 13 in Richtung der Längsachse L gesehen), das eine flexible Anordnung der benötigten Maschinenkomponenten erlaubt.

Demgemäß ist es nicht wesentlich, dass der Grundrahmen 14 bzw. die Stützelemente 6 und 7 genau gefertigt sind. Die Genauigkeit der Spritzgießmaschine wird alleinig durch die Präzision des Trägerrahmens 5 hergestellt.

Auch die Anbringung von Zusatzelementen 16, 17, d. h. von Zusatzgeräten für spezielle Funktionen, ist flexibel möglich. Bei den Zusatzelementen kann es sich beispielsweise um Messmodule für die gefertigten Formteile handeln; diese können eine Kamera umfassen. Weitere Zusatzelemente können Geräte für die Funktionsprüfung der gefertigten Formteile sein.

### Bezugszeichenliste:

- 1: Spritzgießmaschine
- 2: Maschinenbett
- 3: Werkzeugschließeinheit
- 4: Spritzeinheit
- 5: Trägerrahmen (Formrohrrahmen)
- 6: Stützelement
- 7: Stützelement
- 8: Verbindungsschenkel
- 9: Seitenschenkel
- 10: Seitenschenkel
- 11: Befestigungsschenkel
- 12: Befestigungsschenkel
- 13: Durchgangsbohrung
- 14: Grundrahmen
- 15: Auflagefläche
- 16: Zusatzelement
- 17: Zusatzelement
- 18: Verbindungsstrebe

- L: Längsrichtung

## Patentansprüche

1. Spritzgießmaschine (1), umfassend ein Maschinenbett (2), auf dem zumindest eine Werkzeugschließeinheit (3) und eine Spritzeinheit (4) lagert, wobei das Maschinenbett (2) einen Trägerrahmen (5) umfasst, auf dem die Werkzeugschließeinheit (3) und die Spritzeinheit (4) angeordnet ist, wobei der Trägerrahmen (5) auf Stützelementen (6, 7) des Maschinenbetts (2) aufliegt,
**dadurch gekennzeichnet,**
**dass** der Trägerrahmen (5) ein sich in eine Längsrichtung (L) erstreckendes Profil ist.

2. Spritzgießmaschine nach Anspruch 1, **dadurch gekennzeichnet, dass** das Profil des Trägerrahmens (5) U-förmig ausgebildet ist, wobei ein Verbindungsschenkel (8) vorhanden ist, an dem seitlich je ein Seitenschenkel (9, 10) ansetzt.

3. Spritzgießmaschine nach Anspruch 2, **dadurch gekennzeichnet, dass** an den vom Verbindungsschenkel (8) beabstandeten Enden der Seitenschenkel (9, 10) je ein Befestigungsschenkel (11, 12) angeformt ist, der parallel zum Verbindungsschenkel (8) verläuft.

4. Spritzgießmaschine nach Anspruch 3, **dadurch gekennzeichnet, dass** das Profil des Trägerrahmens (5) rechteckförmig ausgebildet ist.

5. Spritzgießmaschine nach einem der Ansprüche 1 bis 4, **dadurch gekennzeichnet, dass** der Trägerrahmen (5) aus Blech, insbesondere aus Stahlblech, besteht.

6. Spritzgießmaschine nach einem der Ansprüche 1 bis 5, **dadurch gekennzeichnet, dass** der Trägerrahmen (5) durch Abkanten eines ebenen Blechstreifens gebildet ist.

7. Spritzgießmaschine nach einem der Ansprüche 1 bis 6, **dadurch gekennzeichnet, dass** der Trägerrahmen (5) mit einer Vielzahl von Durchgangsbohrungen (13) versehen ist.

8. Spritzgießmaschine nach Anspruch 7, **dadurch gekennzeichnet, dass** die Durchgangsbohrungen (13) zumindest teilweise äquidistant zueinander angeordnet sind.

9. Spritzgießmaschine nach einem der Ansprüche 1 bis 8, **dadurch gekennzeichnet, dass** die Werkzeugschließeinheit (3) und die Spritzeinheit (4) durch Schraubverbindungen am Trägerrahmen (5) befestigt sind.

## Claims

1. Injection moulding machine (1) comprising a machine bed (2) on which at least one mould clamping unit (3) and one injection unit (4) are mounted, wherein the machine bed (2) comprises a carrier frame (5) on which the mould clamping unit (3) and the injection unit (4) are arranged, wherein the carrier frame (5) resting on support elements (6, 7) of the machine bed (2),
**characterized in**
**that** the carrier frame (5) is a profile extending in a longitudinal direction (L).

2. Injection moulding machine according to claim 1, **characterised in that** the profile of the support frame (5) is U-shaped, wherein a connecting limb (8) is present, to which each a side limb (9, 10) is attached laterally.

3. Injection moulding machine according to claim 2, **characterised in that** each a fastening limb (11, 12) is formed onto each of the ends of the side limbs (9, 10) at a distance from the connecting limb (8), which fastening limb runs parallel to the connecting limb (8).

4. Injection moulding machine according to claim 3, **characterised in that** the profile of the support frame (5) is rectangular.

5. Injection moulding machine according to one of claims 1 to 4, **characterised in that** the carrier frame (5) consists of sheet metal, in particular steel sheet.

6. Injection moulding machine according to one of claims 1 to 5, **characterised in that** the carrier frame (5) is formed by edge bending a flat sheet metal strip.

7. Injection moulding machine according to one of claims 1 to 6, **characterised in that** the carrier frame (5) is provided with a plurality of through-holes (13).

8. Injection moulding machine according to claim 7, **characterised in that** the through-holes (13) are arranged at least partially equidistant from one another.

9. Injection moulding machine according to one of claims 1 to 8, **characterised in that** the mould clamping unit (3) and the injection unit (4) are attached to the carrier frame (5) by screw connections.

## Revendications

1. Machine (1) de moulage par injection comprenant un lit (2) de machine sur lequel sont montées au moins une unité (3) de fermeture d'outil et une unité d'injection (4) ,
le lit (2) de la machine comprenant un bâti porteur (5) sur lequel sont disposées l'unité (3) de fermeture d'outil et l'unité d'injection (4),
le bâti porteur (5) reposant sur des éléments de soutien (6,7) du lit (2) de la machine,
**caractérisée en ce que**
le bâti porteur (5) est un profilé allongé dans le sens de sa longueur (L).

2. Machine de moulage par injection selon la revendication 1, **caractérisée en ce que** le profilé du bâti porteur (5) a la forme d'un U présentant une aile de liaison (8) à chaque côté de laquelle se raccorde une aile latérale (9, 10).

3. Machine de moulage par injection selon la revendication 2, **caractérisée en ce qu'**une aile de fixation (11, 12) qui s'étend parallèlement à l'aile de liaison (8) est formée à l'extrémité des ailes latérales (9, 10) non jointive par rapport à l'aile de liaison (8).

4. Machine de moulage par injection selon la revendication 3, **caractérisée en ce que** le profilé du bâti porteur (5) a une forme rectangulaire.

5. Machine de moulage par injection selon l'une des revendications 1 à 4, **caractérisée en ce que** le bâti porteur (5) est formé de tôle et en particulier de tôle d'acier.

6. Machine de moulage par injection selon l'une des revendications 1 à 5, **caractérisée en ce que** le bâti porteur (5) est formé par coudage d'un ruban de tôle plan.

7. Machine de moulage par injection selon l'une des revendications 1 à 6, **caractérisée en ce que** plusieurs perforations (13) sont alésées dans le bâti porteur (5).

8. Machine de moulage par injection selon la revendication 7, **caractérisée en ce que** qu'au moins certaines des perforations (13) sont équidistantes les unes des autres.

9. Machine de moulage par injection selon l'une des revendications 1 à 8, **caractérisée en ce que** l'unité (3) de fermeture d'outil et l'unité d'injection (4) sont fixées sur le bâti porteur (5) par des liaisons filetées.
